Europäisches Patentamt

European Patent Office

Office européen des brevets

(19)

(11) **EP 1 602 880 A1**

(12) **EUROPEAN PATENT APPLICATION**
published in accordance with Art. 158(3) EPC

(43) Date of publication:
**07.12.2005 Bulletin 2005/49**

(51) Int Cl.⁷: **F23C 3/00**, F23L 15/02, F23D 14/12

(21) Application number: **04714471.2**

(22) Date of filing: **25.02.2004**

(86) International application number:
**PCT/JP2004/002203**

(87) International publication number:
**WO 2004/076920 (10.09.2004 Gazette 2004/37)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.02.2003 JP 2003046978**

(71) Applicants:
• **Nippon Furnace Kogyo Kabushiki Kaisha Yokohama-shi, Kanagawa 230-8666 (JP)**
• **JFE Steel Corporation Tokyo 1000011 (JP)**

(72) Inventors:
• **HASEGAWA, Toshiaki Tsurumi-ku Yokohama-shi, Kanagawa 230866 (JP)**
• **TADA, Takeshi Tsurumi-ku Yokohama-shi, Kanagawa 230866 (JP)**

• **MOCHIDA, Susumu Tsurumi-ku Yokohama-shi, Kanagawa 230866 (JP)**
• **KITAHARA, Shinya Tsurumi-ku Yokohama-shi, Kanagawa 230866 (JP)**
• **FUKUSHIMA, Shinichiro Chiyoda-ku Tokyo 100-0011 (JP)**
• **SUZUKAWA, Yutaka Chiyoda-ku Tokyo 100-0011 (JP)**
• **SUGA, Masaharu Chiyoda-ku Tokyo 100-0011 (JP)**
• **MORI, Isao Chiyoda-ku Tokyo 100-0011 (JP)**
• **OISHI, Hitoshi Chiyoda-ku Tokyo 100-0011 (JP)**
• **ISHIOKA, Munehiro Chiyoda-ku Tokyo 100-0011 (JP)**

(74) Representative: **Zimmermann, Gerd Heinrich et al Zimmermann & Partner, P.O. Box 33 09 20 80069 München (DE)**

(54) **ALTERNATE COMBUSTION TYPE REGENERATIVE RADIANT TUBE BURNER APPARATUS**

(57)    The present invention relates to an alternate combustion type regenerative radiant tube burner apparatus which comprises a circular plate positioned between a burner unit and a main combustion chamber, so that preheated secondary combustion air is fed through an opening of the circular plate to the main combustion chamber. The burner apparatus has the circular plate (10), an annular air throat (2), a cylindrical peripheral cover (30) and a heat-transfer tube (11,16). A front end portion of the peripheral cover is integrally connected with a peripheral edge portion of the circular plate so as to prevent the secondary combustion air of the air throat from leaking on a periphery of the circular plate to the air diluting chamber (3). According to the present invention, the concentration of nitrogen oxides in the combustion exhaust gas can be definitely prevented from increasing, without being affected by the installation condition or thermal deformation of the radiant tube burner apparatus.

FIG.4

EP 1 602 880 A1

**Description**

TECHNICAL FIELD OF THE INVENTION

The present invention relates to an alternate combustion type of regenerative radiant tube burner apparatus, and more particularly, to such an apparatus which has a circular plate positioned between a burner unit and a combustion chamber so that preheated secondary combustion air is fed through an opening of the plate to the combustion chamber.

BACKGROUND OF THE INVENTION

A radiant tube burner apparatus indirectly heating an inside atmosphere of a furnace is practically in use as heating means of a heating furnace for steel, furnace for heat treatment, and so forth. As a kind of the radiant tube burner apparatus, the alternate combustion type regenerative radiant tube burner apparatus is known in the art, in which regenerators of honey-comb structures are provided on both end portions of a radiant tube (Japanese patent laid-open publications Nos. 8-247421, 11-108315, 11-108316, and U.S. patent publication No. 6,027,333).

Conventionally in the alternate combustion type regenerative radiant tube burner apparatus, a velocity of injection of combustion air tends to be set at a relatively high value in order to reduce the concentration of nitrogen oxides in the combustion exhaust gas. Therefore, loss of the total pressure in the burner apparatus increases, so that a large capacity of intake blower and a large capacity of exhaust blower have to be installed in many cases. In view of such drawbacks, the present inventors have proposed an alternate combustion type regenerative radiant tube burner apparatus in Japanese patent application No. 2000-237677 (Japanese patent laid-open publication No. 2002-48334), wherein a circular plate is positioned between a burner unit and a main combustion chamber inside of a radiant tube so that fuel and primary combustion air are fed to the main combustion chamber by means of a heat-transfer tube extending through the circular plate. According to this arrangement of the burner apparatus, a distal end portion of the heat-transfer tube protrudes from the circular plate into the main combustion chamber and opens thereto. An inside space of the heat-transfer tube constitutes a primary combustion chamber for mixing the primary combustion air and the fuel. An air diluting chamber in an annular form, which opens to the main combustion chamber, is defined around the distal end portion of the heat-transfer tube. Secondary combustion air is heated up to a high temperature by heat-transfer contact with a regenerator and then, enters the air diluting chamber through an opening of the circular plate. The secondary combustion air ejected to the main combustion chamber is diluted with combustion gas of the main combustion chamber. According to the radiant tube burner apparatus thus arranged, it is possible to reduce the velocity of secondary combustion air down to 20m/s~50m/s, thereby reducing the loss of total pressure in the radiant tube burner apparatus without increasing the concentration of nitrogen oxides in the combustion exhaust gas.

However, in experiments for practical use of the radiant tube burner apparatus with this arrangement, a phenomenon has taken place in which the concentration of nitrogen oxides in the combustion exhaust gas increases, depending on setting of an attitude or orientation of the radiant tube burner apparatus. It has been found that such increase in the concentration of nitrogen oxides is also caused by thermal deformation of a tube portion.

The attitude or orientation of the radiant tube burner apparatus is of the nature to be appropriately changed in its design, depending on the purpose or structure of the furnace, i.e., the condition of its installation. Further, the thermal deformation of the tube portion is apt to be remarkably caused in a middle-sized or large-sized radiant tube burner apparatus with an increased diameter. Therefore, it is necessary to definitely prevent increase in the concentration of nitrogen oxides in the combustion exhaust gas due to such causes.

It is an object of the present invention to provide an alternate combustion type regenerative radiant tube burner apparatus, which has the circular plate positioned between the burner unit and the main combustion chamber so that the preheated secondary combustion air is fed through the opening of the plate to the main combustion chamber, wherein the concentration of nitrogen oxides in the combustion exhaust gas can be definitely prevented from increasing, without being influenced by the installation condition or thermal deformation of the apparatus.

DISCLOSURE OF THE INVENTION

The present inventors have found that the concentration of nitrogen oxides in the combustion exhaust gas can be definitely prevented from increasing, by fully blocking the secondary combustion air flowing through a peripheral edge portion of the circular plate to the main combustion chamber. The present inventors have attained the object of the invention as set forth above, based on such findings.

The present invention provides an alternate combustion type regenerative radiant tube burner apparatus having a radiant tube (14) defining a main combustion chamber (4) and burner units (15) provided on both end portions of the radiant tube, the burner unit being provided with a regenerator (13) and fluid passages (17, 18) for primary combustion air and fuel, the regenerator being alternately in heat-transfer contact with secondary combustion air or combustion exhaust gas, and the fluid passages extending through the regenerator, comprising:

a circular plate (10) positioned between said burner unit (15) and said main combustion chamber (4); an annular air throat (2) provided between the circular plate and the regenerator, into which the secondary combustion air flows after passing through said regenerator; a cylindrical peripheral cover (30) extending from a peripheral edge portion of said circular plate to a peripheral edge portion of said regenerator; and a heat-transfer tube (16) protruding forward of said circular plate and opening to said main combustion chamber;

wherein a fuel injection port (17a) and a primary combustion air delivery port (18a, 18b) open in said heat-transfer tube, an inner area of the heat-transfer tube constitutes a primary combustion chamber (1) for mixing the primary combustion air and the fuel, an annular air diluting chamber (3) opening to said main combustion chamber is formed around a distal end portion of the heat-transfer tube, and said circular plate has an opening (12) for communication between said air throat and said air diluting chamber; and

wherein a front end portion of said peripheral cover is integrally connected with the peripheral edge portion of said circular plate so as to prevent the secondary combustion air of said air throat from leaking at a periphery of said circular plate to said air diluting chamber.

In the radiant tube burner apparatus according to the present invention, the secondary combustion air, which has been heated up to a high temperature by heat-transfer contact with the regenerator, flows into the air throat and ejects through the opening of the circular plate to the air diluting chamber. The fuel takes a combustion reaction with the primary combustion air in the primary combustion chamber, so that the fuel is diluted with combustion gas produced by the combustion reaction. The flow of secondary combustion air, which ejects through the opening of the circular plate into the air diluting chamber, induces combustion gas of the combustion chamber, so that a combustion gas recirculation flow reverses into the air diluting chamber. This recirculation flow moves along an outer circumferential surface of the heat-transfer tube to the proximity of the opening and mixes with the flow of secondary combustion air, so that the secondary combustion air is diluted with the combustion gas. The flow of secondary combustion air having an oxygen density or air ratio reduced by mixing with the combustion gas is mixed with the mixed gas flow (F) ejecting from the primary combustion chamber (the fuel diluted with the combustion gas of the primary combustion chamber), whereby a combustion reaction between the mixed gas and the secondary combustion air generates and progresses in the main combustion chamber.

In this kind of radiant tube burner apparatus, a predetermined clearance between the outer edge portion of the circular plate and a wall of the radiant tube is settled for relieving thermal stress of the circular plate and the tube wall of the radiant tube upon the thermal deformation of the tube wall. This clearance is important for incorporating the circular plate into the tube. However, when the radiant tube burner apparatus is actually equipped on a heating furnace or the like, the tube is installed in normal practice in such a position that a center axis of the tube is directed horizontally, and the circular plate is oriented vertically. Since the circular plate rests in a downward eccentric position under the influence of gravity, the clearance between the top edge of the circular plate and an inner wall surface of the tube is enlarged. In a case where the opening of the circular plate is located on a lower side, a relatively large gap or space is created between the top edge of the circular plate and the inner wall surface of the tube. Further, thermal expansion or contraction of the radiant tube and the circular plate are caused remarkably, owing to relatively significant temperature differences between a combustion operation and a pause in the combustion operation. Particularly, the thermal deformation of the radiant tube and the circular plate due to such thermal expansion or contraction appears remarkably in the middle-sized or large-sized radiant tube burner apparatus with a large diameter. This kind of thermal deformation also causes the relatively large gap or space at the peripheral edge portion of the circular plate. As the results of the aforementioned experiments conducted by the present inventors, it has been found that a relatively large quantity of secondary combustion air flow leaks through such a gap or space to the main combustion chamber, so that this flow prevents the combustion gas recirculation flow from being generated.

According to the aforementioned arrangement of this invention, the air throat is defined in the peripheral cover extending from the peripheral edge portion of the circular plate to the peripheral edge portion of the regenerator, and the front edge portion of the cover is integrally connected with the peripheral edge portion of the plate to prevent the secondary combustion air from leaking to the air diluting chamber through the periphery of the plate. The combustion gas recirculation flow is not prevented from occurring, and a sufficient effect of reduction in the nitrogen oxides concentration can be obtained. Therefore, according to the present invention, the combustion gas recirculation flow can be surely generated without being affected by the installation condition or thermal deformation of the radiant tube burner apparatus, and a desired effect of reduction in the nitrogen oxides concentration can be always obtained.

Further, the radiant tube burner apparatus as disclosed in Japanese patent application No. 2000-237677 has an arrangement in that the circular plate and the heat-transfer tube are supported merely in a cantilever condition by the burner unit, and the positions and attitudes of the plate and tube are apt to behave in response to the thermal deformation. However, according to the present invention, since the peripheral cover supports the circular plate in a predetermined position, the positions and attitudes of the plate and tube are stable.

Furthermore, provision of the peripheral cover permits the clearance to be unintentionally enlarged, and enables intentional enlargement of the clearance or change in setting of the clearance. That is, flexibility of design in a combination of the tube and burner unit or a relative position between the tube and the burner unit can be obtained in accordance with the aforementioned arrangement of the present invention, and this enables arbitrary setting of clearance between the peripheral edge portion of the circular plate and the tube wall, setting of clearance enough to facilitate assembling or replacing works for the burner unit, standardization of design of the burner unit adaptable to differences of practical size or standard of the tube diameter and the like, or design of the burner unit applicable to different radiant tubes, and so forth.

Nevertheless, the peripheral cover surely prevents the secondary combustion air from leaking through the periphery of the circular plate to the air diluting chamber, and therefore, desired effect of reduction in the nitrogen oxides concentration can be obtained by the present radiant tube burner apparatus.

Preferably, the peripheral cover is contained in the radiant tube in such a condition that the thermal deformation of the cover in its axial direction is not restrained by the radiant tube and the regenerator. The relief of thermal deformation in the axial direction can prevent concentration of the thermal stress from occurring at a joint portion of the plate and the cover. That is, breakage or damage due to concentration of the thermal stress is not caused at the joint portion of the plate and the cover.

The present invention also provides a radiant tube burner apparatus with the aforementioned arrangement, wherein a center (PC) of the opening (12) is positioned in a zone redially outside of a circle (R) centered on a center line (C) of the circular plate, the circle (R) having a predetermined radius S, and the radius S equals [(an inner diameter Dt of the radiant tube +an outer diameter Dr of the heat-transfer tube)/4]. Preferably, each of the centers (PC) of the openings (12) is positioned on a center circle (PCD). The circle (PCD) has a center on a center line (C) of the radiant tube and a diameter (PCR) larger than the diameter S. More preferably, an area for positioning the opening of the circular plate is limited to a central angle range (γ) equal to or less than 250° about the center of the circular plate (γ ≦ 250°).

According to such an arrangement, the center (PC) of the opening (12) is eccentrically positioned on the radially outer zone of the circular plate, whereby the area for movement of the combustion gas recirculation flow is enlarged and a combustion gas inducing action of ejected flow of the secondary combustion air is enhanced. As set forth above, the secondary combustion air is prevented from leaking through the periphery of the circular plate to the air diluting chamber. In connection with this, the combustion gas of the main combustion chamber is effectively induced by the secondary combustion air flow ejected from the opening of the circular plate so that the secondary combustion air is efficiently diluted with the combustion gas in the air diluting chamber.

The velocity of the airflow at the opening (12) may be set to be equal to or lower than 30m/s, preferably equal to or lower than 25m/s, more preferably equal to or lower than 20m/s. Such reduction in velocity allows loss of the total pressure in the radiant tube burner apparatus to be reduced. In spite of such setting of a reduced airflow velocity, the nitrogen oxides concentration of the combustion exhaust gas can be restricted by fuel reforming (dilution) and the combustion gas recirculation, according to the radiant tube burner apparatus having the aforementioned arrangement.

Preferably, a fuel injection port (17a) and a primary combustion air delivery port (18a, 18b) are positioned on a plane of the circular plate or in front thereof, and the heat-transfer tube protrudes forward from the circular plate to a relatively large extent. According to such an arrangement, a relatively large recirculation area of the combustion gas can be formed rearward of a mixture gas outlet port (a distal end portion of the heat-transfer tube).

More preferably, a flame stabilizing tube (41) is located to surround the fuel injection port and the primary combustion air delivery port, and a pilot fuel injection port (40) opens in the flame stabilizing tube. This tube defines a flame stabilizing section (42) therein for stabilizing the flame in the primary and main combustion chambers.

From another aspect, the present invention provides an alternate combustion type regenerative radiant tube burner apparatus having a radiant tube (14) defining a main combustion chamber (4) and burner units (15) provided on both end portions of the radiant tube, the burner unit being provided with a regenerator (13) and fluid passages (17, 18) for primary combustion air and fuel, the regenerator being alternately in heat-transfer contact with secondary combustion air or combustion exhaust gas, and the fluid passages extending through the regenerator, comprising:

a circular plate (10) positioned between said burner unit (15) and said main combustion chamber (4); an annular air throat (2) provided between the circular plate and the regenerator, into which the secondary combustion air flows after passing through said regenerator; a cylindrical peripheral cover (30) extending from a peripheral edge portion of said circular plate to a peripheral edge portion of said regenerator; and a heat-transfer tube (16) protruding forward of said circular plate and opening to said main combustion chamber;

wherein a fuel injection port (17a) and a primary combustion air delivery port (18a, 18b) open in said heat-transfer tube, an inner area of the heat-transfer tube constitutes a primary combustion chamber (1) for mixing the primary combustion air and the fuel, an air diluting chamber (3) in an annular form opening to said main combustion chamber is formed around a distal end portion of the heat-transfer tube, and said circular plate has an opening (12) for communication between said air throat and said air diluting chamber; and

wherein a distance (L4) between said regenerator and said circular plate is set in such a manner that a ratio (L4/Dt) of the distance (L4) to an inner diameter (Dt) of the radiant tube is equal to or less than 1.0.

Preferably, the ratio (L4/Dt) is equal to or less than 0.8, more preferably, equal to or less than 0.5.

Preferably, the peripheral cover and the regenerator are connected displaceably in an axial direction, a velocity of airflow at the opening (12) of the circular plate is set to be equal to or less than 30m/s, and a velocity of the exhaust gas at the opening is set to be equal to or less than 35m/s.

A thickness of the peripheral cover is set to be, preferably, equal to or less than 8mm, more preferably, equal to or less than 6mm, and the peripheral cover is constituted from a part other than a metal casting part, e.g., a heat-resistant metal alloy plate shaped by bending.

From yet another aspect, the present invention provides a combustion method in an alternate combustion type regenerative radiant tube burner apparatus; wherein a circular plate (10) is positioned between a main combustion chamber (4) in a radiant tube (14) and a regenerator (13) alternately in heat-transfer contact with secondary combustion air or combustion exhaust gas, primary combustion air and fuel are fed to the main combustion chamber through a heat-transfer tube (11, 16) extending through the circular plate; and wherein an air diluting chamber (3) in an annular form opening to the main combustion chamber is formed around a distal end portion of the heat-transfer tube so that the secondary combustion air (A) heated up to a high temperature by heat-transfer contact with the regenerator enters the air diluting chamber, and said fuel and said primary combustion air are mixed with said secondary combustion air in the main combustion chamber while an ejected flow of the secondary combustion air induces the combustion gas of the main combustion chamber, comprising:

blocking fluid communication between areas on both sides of said circular plate, at a periphery of the circular plate, so that the fluid communication between these areas are limited to an opening (12) disposed in a range of central angle of said circular plate ($\gamma$) equal to or less than 250° ($\gamma \leqq 250°$), a center (PC) of the opening being positioned in a zone radially outside of a circle (R) with a predetermined radius (S) about a center line (C) of the circular plate, and the radius (S) being equal to [(an inner diameter Dt of the radiant tube + an outer diameter Dr of the heat-transfer tube)/4]; and

injecting said secondary combustion air to said air diluting chamber at a velocity equal to or less than 30m/s by said opening (12), and directing an ejected flow of the combustion exhaust gas of the main combustion chamber toward said regenerator at a velocity equal to or less than 35m/s by the opening (12).

According to such a combustion method, the fluid communication at the periphery of the circular plate is blocked, and a fluid passage (area) for inducing the combustion gas of the main combustion chamber into the air diluting chamber is always ensured in the angular range ($\theta$) in which any opening is not provided. The opening is positioned radially outward of the circular plate, and therefore, the area for inducing the combustion gas recirculation flow toward the main combustion chamber is formed between the flow of the secondary combustion air and the outer surface of the heat-transfer tube. Thus, the combustion air diluted with the combustion gas is surely mixed with injected fuel (fuel diluted with the combustion gas by the primary combustion) from the rear side of the injected flow, so that the nitrogen oxides concentration of the combustion exhaust gas can be surely reduced.

Preferably, the quantity of supply of the primary combustion air is set to be 10~20% of the theoretical amount of air required for complete combustion of the fuel. More preferably, the primary combustion air and the fuel are fed to the primary combustion chamber through the flame stabilizing section (41), and a pilot fuel of 2~8% of the fuel supply is fed to the flame stabilizing section.

BRIEF DESCRIPTION OF THE DRAWINGS

FIGS. 1 and 2 are a schematic cross-sectional view and a vertical cross-sectional view generally showing a preferred embodiment of an alternate combustion type regenerative radiant tube burner apparatus according to the present invention;

FIG. 3(A) is a cross-sectional view taken along line I-I of FIG. 4, and FIG. 3(B) is a cross-sectional view taken along line II-II of FIG. 4;

FIG. 4 is a cross-sectional view taken along line III-III of FIG. 3;

FIG. 5(A) is a cross-sectional view showing a relation between a circular plate and a clearance, and FIG. 5(B) is a cross-sectional view which conceptually illustrates an examined model for studying a relation between a volume of air leaking through a gap and a flow rate of air at an opening;

FIG. 6(A) is a diagram showing a relation between the size of gap and the volume of air leaking through the gap, and FIG. 6(B) is a diagram showing a relation between the size of gap and a concentration of NOx in a combustion exhaust gas;

FIGS. 7(A) and 7(B) are cross-sectional views conceptually illustrating the distribution of the gap around the circular plate, and FIG. 7(C) is a table showing a relation between an angular range of the blocked gap and the concentration of NOx in the combustion exhaust gas;

FIG. 8(A) is a schematic perspective view conceptually showing a relation between the circular plate and a regenerator on an exhaust side, and FIG. 8 (B) is a diagram showing a variation in a cross-sectional area of an effluent flow of the combustion exhaust gas;

FIGS. 9 and 10 are a perspective view and a vertical cross-sectional view of the burner apparatus provided with a peripheral cover, which schematically show streams of a secondary combustion air effluent from the openings of the circular plate into an air diluting chamber;

FIGS. 11 and 12 are a perspective view and a vertical cross-sectional view of the burner apparatus without the peripheral cover, which schematically show the streams of the secondary combustion air effluent from the opening of the circular plate into the air diluting chamber.

## BEST MODE FOR CARRYING OUT THE INVENTION

With reference to the attached drawings, a preferred embodiment of the present invention is described hereinafter.

## Structure of Burner Apparatus

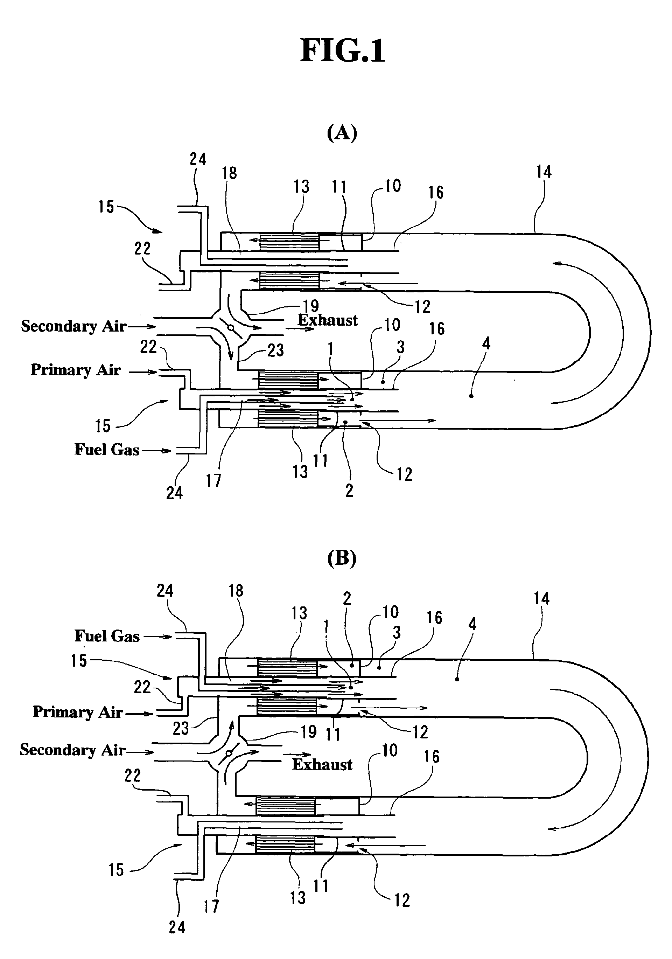

As shown in FIG.1, an alternate combustion type regenerative radiant tube burner apparatus (referred to as "burner apparatus" hereinafter) has a radiant tube 14 forming a main combustion chamber 4. Burner units 15 are provided on both end portions of the tube 4. A four-way valve 19 is connected with the respective burner units 15 so that each of the burner units 15 is selectively connected to either an air supply system or an exhaust system. Each of the burner units 15 is provided with a ceramic regenerator 13 having a honey-comb structure. A fuel feed passage 17 and a primary air passage 18 of the burner unit 15 extend through the regenerator 13. The burner units 15 in a pair are alternately changed over to either an operation mode as shown in FIG. 1(A) or an operation mode as shown in FIG. 1(B) at predetermined time intervals, so that the burner units 15 alternately carry out a combustion operation. The four-way valve 19 is changed over simultaneously with change-over operation of the burner units 15, so that the valve 19 alternately takes either of positions as shown in FIGS. 1(A) and 1(B) respectively, similar to the burner units 15.

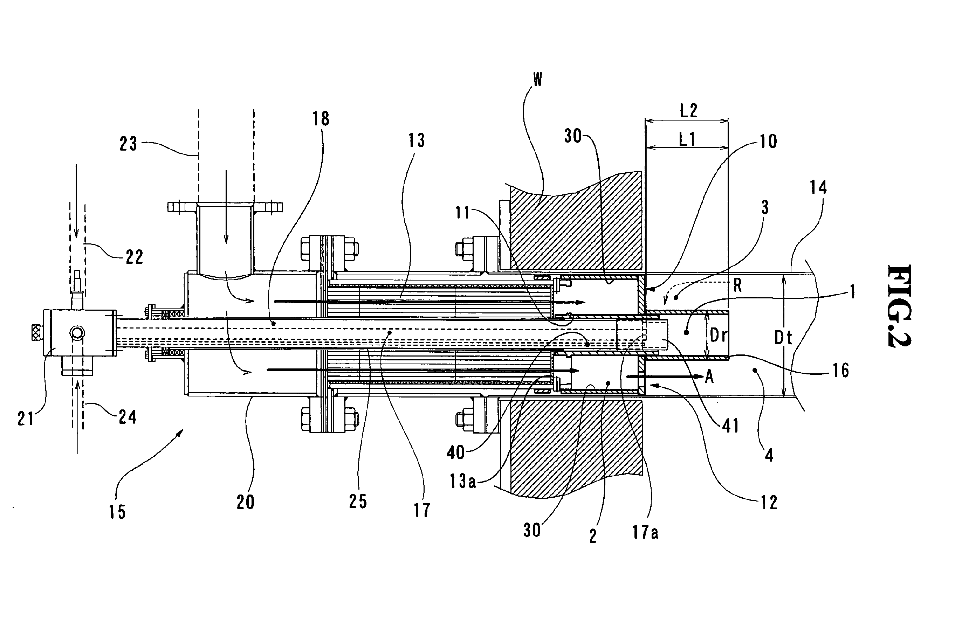

In FIGS. 2 to 4, a construction of the burner unit as shown in FIG. 1 is illustrated.

Each of the end portions of the burner apparatus extends through a furnace wall W, and an air case 20 and a burner gun 21 of the burner unit 15 are exposed to an outside of a furnace. The air case 20 and the burner gun 21 are connected with a primary air supply pipe 22, a secondary air supply pipe 23 and a fuel feed pipe 24, respectively. The fuel feed passage 17 and the primary air passage 18 extend through a center part of the regenerator 13 and protrude forward from a front face of the regenerator 13. A fuel injection nozzle 17a and primary air delivery ports 18a, 18b are open to the primary combustion chamber 1.

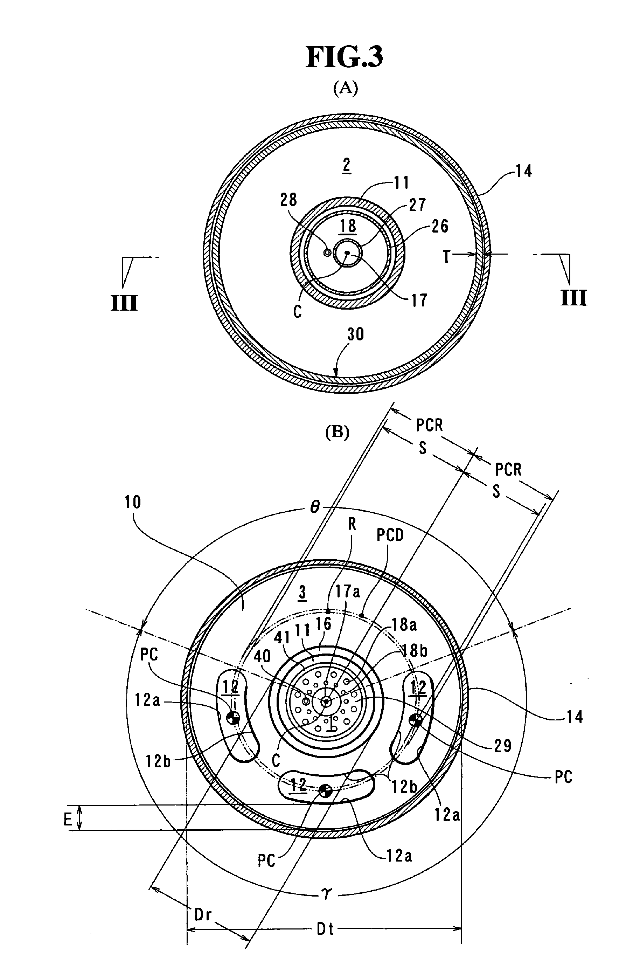

A guide pipe 25 extends through a center part of each of the regenerator 13 and a metal wire mesh 13a, and the pipe 25 is connected with a proximal heat-transfer tube 11. A primary air supply tube 26 forming the primary air passage 18 is located in a guide pipe 25 and the heat-transfer tube 11. As shown in FIG. 3(A), a fuel feed tube 27 forming the fuel feed passage 17 is positioned at a center part of the primary air supply tube 26, and a pilot fuel tube 28 for feeding a pilot fuel is positioned within the tube 26 in parallel with the tube 27.

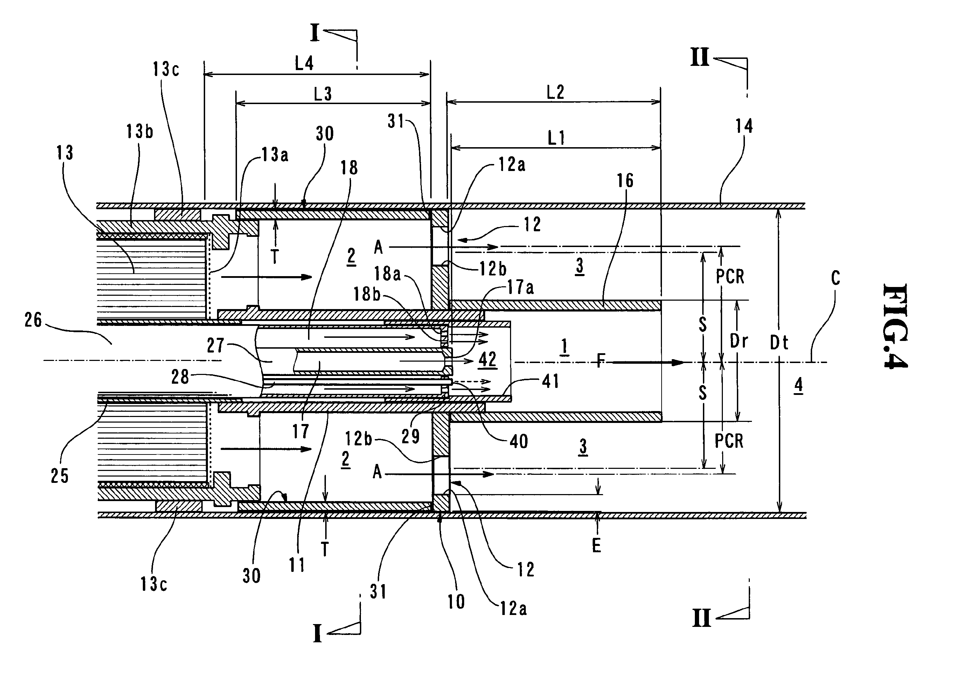

As shown in FIG. 4, a distal end of the air supply tube 26 is closed by a distal end plate 29 perpendicular to an axis of the tube 26. The fuel injection nozzle 17a of the fuel feed tube 27 is positioned on the plate 29. The primary air delivery ports 18a, 18b are formed on the plate 29 and a pilot fuel injector 40 extends through the plate 29.

As shown in FIG. 3(B), the fuel injection nozzle 17a is positioned at a center part of the distal end plate 29, and the primary air delivery ports 18a, 18b are disposed at equal intervals in a concentric formation around the fuel injection nozzle 17a. Each of the ports 18a arrayed in a form of outside circle has a diameter greater than the diameter of each of the ports 18b arrayed in a form of inside circle, so that the port 18a injects a larger quantity of primary air, compared to the quantity of primary air injected from the port 18b. The pilot fuel injector 40 is positioned in the circular array of the ports 18b, and the fuel injected from the injector 40 takes a combustion reaction with, mainly, the flow of air injected from the ports 18b.

As shown in FIG. 4, a circular plate 10 is located in front of the regenerator 13. The proximal heat-transfer tube 11 extends through a center part of the plate 10. The plate 10 and the tube 11 are integrally assembled by fixing means (not shown) such as welding. The plate 10 and the tube 11 may be constituted by an integrally formed single metal part.

An annular air throat 2 is formed to surround the proximal heat-transfer tube 11. The throat 2 is in communication with the respective cells (honey-comb fluid passages) of the regenerator 13. The tube 11 slightly protrudes forward of the circular plate 10. A flame stabilizing tube 41 protrudes forward from an outer periphery of the primary air supply tube 26 so that a flame stabilizing section 42 is formed in close proximity to an injection port of the fuel injection nozzle 17a.

The distal heat-transfer tube 16 extends forward from a periphery of the proximal heat-transfer tube 11. An inner diameter of the tube 16 corresponds to an outer diameter of the tube 11. A rear end portion of the tube 16 is integrally and airtightly assembled to a periphery of a front end portion of the tube 11 by fixing means (not shown) such as welding. The tubes 11, 16 may be an integrally formed single metal part.

The distal heat-transfer tube 16 defines a primary combustion chamber 1 therein. The fuel of the fuel injection nozzle 17a mixes with the primary air of the primary air delivery ports 18a, 18b in the chamber 1. A mixed gas flow F of the fuel and the primary air effluent from a distal end opening of the tube 16 enters the main combustion chamber 4.

An annular air diluting chamber 3 is formed to surround the distal heat-transfer tube 16. The circular plate 10 is provided with a plurality of openings 12 (three openings in this embodiment), which opens to the air diluting chamber 3. The secondary combustion air supplied to the air throat 2 is ejected to the air diluting chamber through the respective openings 12. Preferably, a velocity of an airflow through the opening 12 is set to be in a range from 20cm/s to 30cm/s.

As shown in FIG. 3(B), each of the openings 12 is configured in a form of curved slot circumferentially extending, and the openings 12 are arranged symmetrically, spaced at an equal angle. In this embodiment, outlines of the plate 10, the tube 16 and the plate 29 are circles concentric with a center line C of the radiant tube 14. An outside edge 12a of the opening 12 and an inside edge 12b thereof are curved with predetermined radiuses of curvature about the center line C. A center PC of each of the openings 12 is positioned on a center circle PCD. A radius PCR of the circle PCD corresponds to an average value of the radiuses of the edges 12a, 12b.

The openings 12 are deviated to a range of angle γ about the center of plate 10. In the range of angle θ about the center of the plate 10, the plate 10 functions as a blind plate which does not have any opening. The centers PC of the openings 12 are positioned radially outside of a circle R with a radius S which is centered on the center line C.

The radius S of the circle R and the radius PCR of the circle PCD are set to be as follows:

$$PCR > S = (Dr + Dt)/4$$

wherein Dt is an inner diameter of the radiant tube 14 and Dr is an outer diameter of the heat-transfer tube 16.

The area for positioning the openings 12 is restricted to the range of central angle (γ) equal to or less than 250° (γ ≦ 250°).

If the opening 12 is designed to have another configuration such as a circle, or if the opening 12 is designed to have an uncertain or irregular configuration, the center PC of the opening 12 can be determined to be, e.g., a center of the mass (a gravitational center) with respect to the configuration of the opening. Further, the open area ratio of the circular plate 10 (the total area of the openings 12/the cross-sectional area of the air diluting chamber 3) is set to be in a range from 20% to 50%. Preferably, the openings 12 are positioned as radially outward as possible, as shown in FIG. 4, provided that an edge part dimension E required for a structural strength is ensured (e.g., E≧5mm).

A diameter (outer diameter) of the circular plate 10 is set to be 2mm ~3mm smaller than the inner diameter Dt of the tube 14, so that clearance of 1mm~1.5mm on the average can be ensured around the plate 10 for inserting the plate 10 into the tube 14 upon assembly of the burner apparatus.

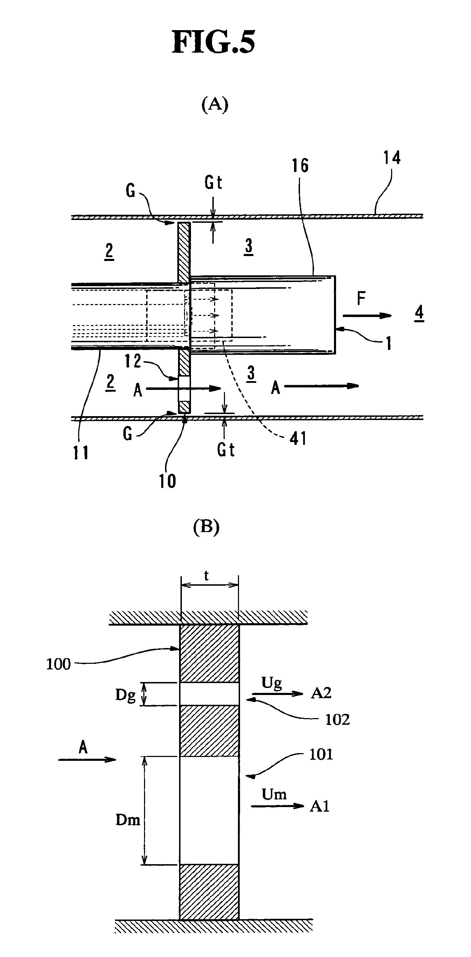

FIG. 5(A) is a cross-sectional view showing the relation between the circular plate 10 and the clearance.

A gap G having a gap size Gt is defined between an outside surface of the circular plate 10 and an inside surface of the tube 14 by means of the clearance around the circular plate. Influence of the gap G is described hereinafter.

Influence of Gap

FIG. 5(B) is a cross-sectional view showing an examined model for studying the ratio of the flow rates at the gap G and the opening 12.

In FIG. 5(B), a plate 100 is illustrated, which is located in a fluid passage of air and which is perpendicular to a direction of the flow of air A. The plate 100 is provided with a principal opening 101 having a diameter Dm and a subsidiary opening 102 having a diameter Dg. The openings 101, 102 are round openings extending through the plate 100. It is assumed that the principal opening 101 corresponds to the aforementioned opening 12 and that the subsidiary opening 102 corresponds to the aforementioned gap G. It is also assumed that the fluid (air) is an incompressible fluid. As regards a pressure loss of the fluid, only a friction resistance is taken into consideration. It is supposed, on an analysis basis, that the diameter of the opening 102 is 2mm (Dg=2mm) and the thickness of the plate 100 is 10mm (t=10mm).

In order to reduce the velocity Um of the airflow A1 from 50m/s to 20m/s while the flow rate of the airflow A1 effluent from the opening 101 is kept constant, the diameter Dm is changed from 23mm(Um=50m/s) to 36mm(Um=20m/s). This results in change of velocity Ug of the airflow A2 through the opening 102, wherein the velocity Ug varies from Ug=41.8m/s (Um=50m/s) to Ug=12.8m/s (Um=20m/s), although detailed explanation of an analytical method is omitted. That is, as the airflow velocity Um at the opening 101 is reduced, the airflow velocity Ug at the opening 102 is extensively reduced, compared to a ratio of reduction in the flow velocity at the opening 101.

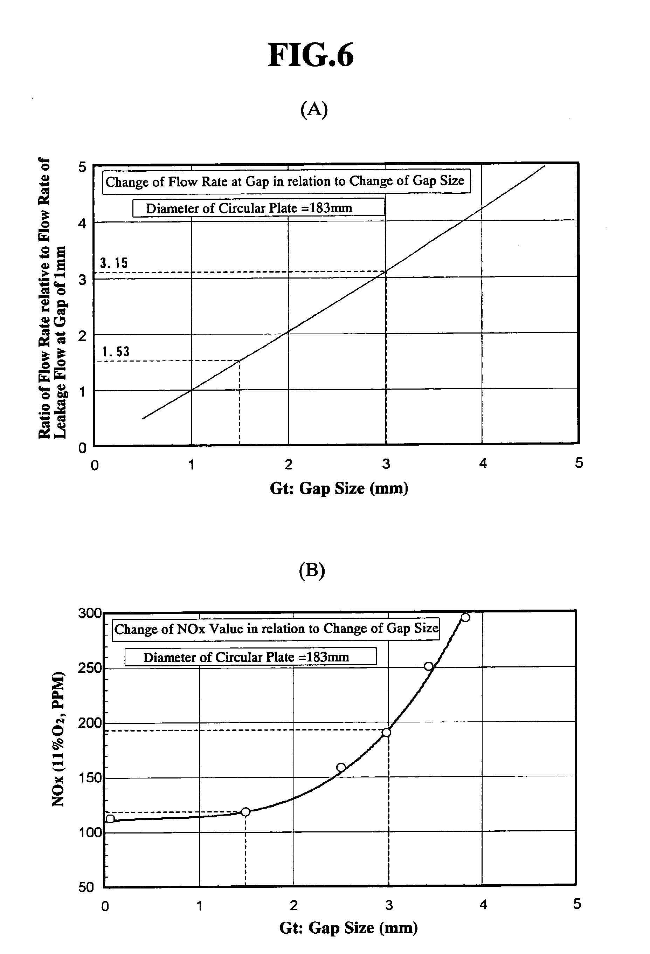

FIG. 6(A) is a diagram showing a relation between the gap size Gt and the flow rate leaking through the gap G, and FIG. 6(B) is a diagram showing a relation between a concentration of NOx in the combustion exhaust gas and the gap size Gt. The leakage flow rate of air and the concentration of NOx as shown in FIG. 6 are those of the burner apparatus having a nominal diameter of 7B (the diameter of the tube = 7 inches), in which the velocity of flow at the opening 12 is set to be 20m/s.

In FIG.6(A), the flow rate of air, which leaks through the gap G having a gap size Gt of 1mm (Gt=1mm), is defined as a reference flow rate (=1). Increase in the flow rate of the leakage air involved in enlargement of the gap size Gt is indicated in FIG. 6(A) by the ratio of flow rate relative to the reference flow rate.

As shown in FIG. 6(A), the flow rate of air leaking through the gap G is increased substantially in proportion to enlargement of the gap size Gt. Similarly, the NOx concentration of the combustion exhaust gas gradually increases as the gap size Gt enlarges in a range of the gap size Gt equal to or less than 1.5mm, until the NOx concentration increases up to 115ppm (corrected to 11%$O_2$), as shown in FIG. 6(B). However, the NOx concentration of the combustion exhaust gas rapidly increases in a range of the gap size Gt exceeding 1.5mm, and it increases up to approximately 190ppm when the gap size is equal to 3.0mm.

That is, enlargement of the gap size Gt results in relatively rapid increase of the NOx concentration of the combustion exhaust gas, in spite of relatively remarkable decrease in the velocity (Ug) of airflow at the gap G involved in decrease of the velocity (Um) of airflow at the opening 12. Such a variation of the NOx concentration is a peculiar characteristic observed in the burner apparatus of the present invention, in which effect of reduction of the NOx concentration depends on distribution of airflow in the air diluting chamber 3. This apparently differs from a property of a conventional burner apparatus in which reduction of the NOx concentration depends on the velocity (Um) of high speed airflow.

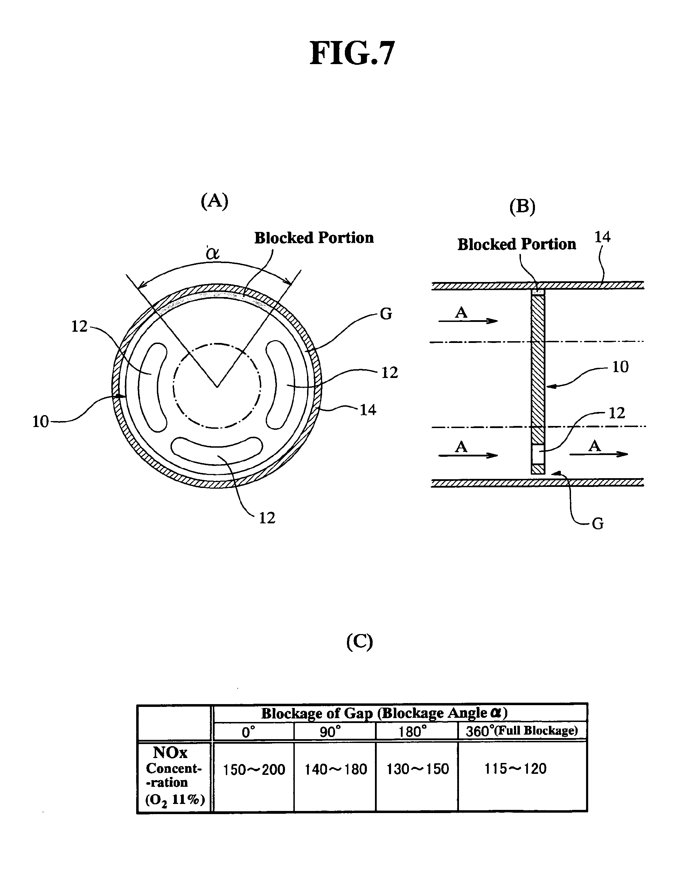

In FIG.7, there is shown a relation between the NOx concentration of the combustion exhaust gas and a position or an angular range of the gap G.

In a case where the gap G exists throughout the whole circumference of the circular plate 10 in the burner apparatus having the gap size Gt of 3mm (Gt=3mm) and a nominal diameter of 7B (the diameter of the tube = 7 inches), the NOx concentration increases up to approximately 150~200ppm (corrected to 11%$O_2$). When the gap G is blocked in an angular range of 90 ° (α =90°), the NOx concentration decreases down to 140~180ppm. When the gap G is blocked in an angular range of 180 ° (α = 180 °), the NOx concentration decreases down to 130~ 150ppm. In a case where the gap G is blocked throughout the whole circumference (α = 360°), the NOx concentration decreases down to 115~120ppm, which is the minimum value. Simultaneously, a deviation of the NOx concentration also decreases as the angular range α is enlarged. When the gap G is blocked throughout the whole circumference (α = 360°), the NOx concentration is stabilized in a range from 115ppm to 120ppm.

Positional Relation between Circular Plate and Regenerator

As previously mentioned, the burner unit 15 is alternately changed over to either of the operation modes as shown in FIGS. 1(A) and 1(B) at predetermined time intervals. Therefore, the opening 12 is not only used to inject the secondary combustion air of the air throat 2 into the air diluting chamber, but also used as an exhaust port for exhausting the combustion exhaust gas of the main combustion chamber 4. Therefore, the length of the air throat 2, i.e., a distance L4 (FIG. 4) between the circular plate 10 and the regenerator 13 is settled so that the combustion exhaust gas G flowing through the opening 12 into the air throat 2 can enter the respective cells of the regenerator 13 substantially uniformly while spreading over the whole area of an end face of the regenerator 13.

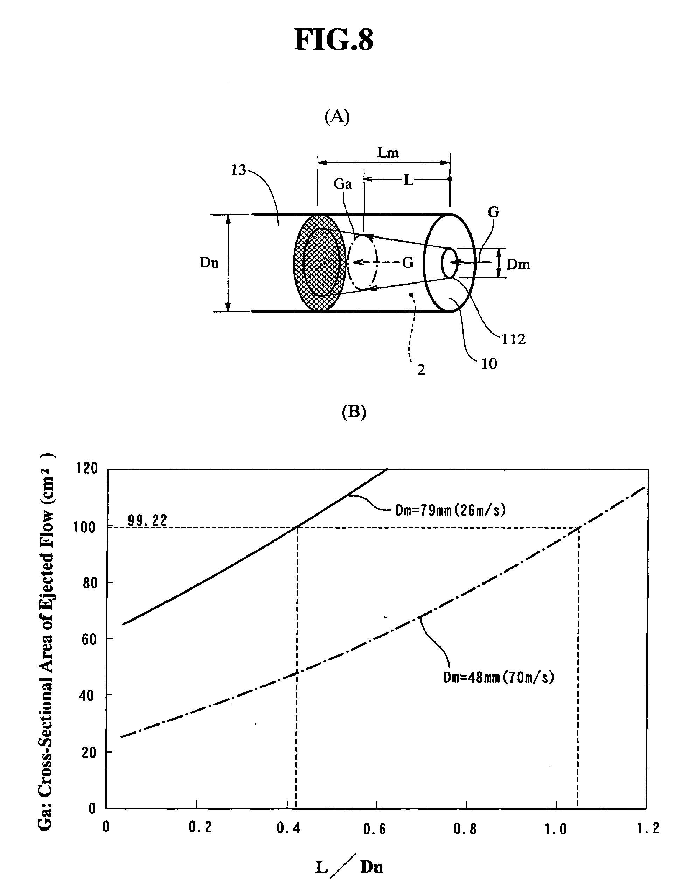

FIG. 8(A) is a schematic perspective view conceptually showing a relation between the circular plate 10 and the regenerator 13, and FIG. 8(B) is a diagram showing a relation between a distance L from the plate 10 and a cross-sectional area Ga of an ejected flow of the combustion exhaust gas. For simplification of description hereinafter, it is assumed that the opening 12 is a center circular opening 112 of the plate 10.

In order to set the flow rate of air at the opening 112 to be 26m/s, a diameter Dm of the opening 112 is set to be 79mm. Further, in order to set the flow rate of air at the opening 112 to be 70m/s, the diameter Dm of the opening 112 is set to be 48mm. In either of these cases, the effluent flow of the combustion exhaust gas G entering the air throat 2 from the opening 112 spreads toward the inlet face of the regenerator 13. In FIG. 8(B), the cross-sectional area Ga of the effluent flow of the combustion exhaust gas in relation with L/Dn is indicated in each of a case of Dm=79mm(26m/s) and a case of Dm=48mm(70m/s), wherein L is a distance between the circular plate 10 and the cross-section of the effluent flow and wherein Dn is a diameter of the regenerator 13.

If the diameter Dn of the regenerator 13 is 144mm (Dn=144mm) and the diameter of the heat-transfer tube 16 is 90mm, the cross-sectional area of the whole cell part of the regenerator 13 is as follows:

$$(14.4/2)^2 \times 3.14 - (9/2)^2 \times 3.14 = approx. 99.2cm^2$$

It can be considered that the effluent flow of the combustion exhaust gas enters the cell part of the regenerator 13, while inevitably avoiding the outline of the heat-transfer tube 16. Therefore, it can be regarded that the effluent flow spreading to this cross-sectional area (approximately 99.2cm) uniformly enters the whole cell part of the regenerator 13.

The value of L/Dn for the cross-sectional area Ga of the effluent flow equal to 99.2cm$^2$ (Ga=99.2cm$^2$) is 0.42 in a case of Dm being equal to 79mm(26m/s), whereas the value of L/Dn for Ga equal to 99.2cm$^2$ (Ga =99.2cm$^2$) is 1.05 in a case of Dm being equal to 48mm (70m/s). Therefore, if the velocity of air is reduced from 79m/s to 26m/s, the distance Lm between the circular plate 10 and the inlet face of the regenerator 13 can be reduced to 0.42/1.05(=0.4).

In the burner apparatus as shown in FIGS. 1 to 4, the opening 12 is eccentric and deformed, and it is somewhat different from the examined model as shown in FIG. 8(A). However, the tendency itself is substantially the same. Therefore, enlargement of the open area of the opening 12 (i.e., reduction in the velocity of flow through the opening 12) enables considerable reduction of the distance L4 (FIG. 4) between the regenerator 13 and the circular plate 10.

Cylindrical Peripheral Cover

As described in "Influence of Gap" , if the velocity of air at the opening 12 is reduced to 20~30m/ s, the velocity of air at the gap G (FIG. 5(A)) is, relatively speaking, remarkably reduced. However, since the size of gap Gt (FIG. 5(A)) significantly affects the NOx concentration of the combustion exhaust gas, it is desired that the gap G is fully blocked. Further, as described in "Positional Relation between Circular Plate and Regenerator", the reduction of the velocity of air through the opening 12 (enlargement of the open area of the opening 12) enables reduction of the distance L4 (FIG. 4) between the regenerator 13 and the circular plate 10.

Therefore, the burner apparatus according to the present invention is provided with a cylindrical peripheral cover 30 which extends between the regenerator 13 and the circular plate 10. The peripheral cover 30 blocks fluid communication between the air throat 2 and the air diluting chamber 3 throughout the whole circumference of the circular plate 10, so that the cover 30 prevents leakage of air through the gap G, which may, otherwise, cause disturbance of gaseous flow distribution in the air diluting chamber 3. Thus, an effect of reduction in the NOx concentration can be surely obtained from this burner apparatus.

As shown in FIG. 4, the periphery cover 30 extends backward from a peripheral edge of the circular plate 10. An outer diameter of the periphery cover 30 is substantially the same as that of the plate 10 or slightly smaller than that of the plate 10. The plate 10 and the heat-transfer tube 16 require strength in high temperature. Therefore, they are constituted from metal casting parts with high strength, or the like. On the other hand, the peripheral cover 30 can be a part other than the metal casting part, which has a circular cross-section. For example, the peripheral cover 30 may be a part constituted from two semicircular plates welded to each other, each shaped by bending a plate of SUS310S (JIS). A front end of the peripheral cover 30 is fixed in an air-tight manner to the peripheral edge portion of the plate 10 by fixing means 31 such as welding.

The peripheral cover 30 fully blocks the fluid communication between the air throat 2 and the air diluting chamber 3 at the outer peripheral edge portion of the circular plate 10. Therefore, the fluid communication between these areas 2, 3 is limited to the opening 12. The peripheral cover 30 also carries the circular plate 10 in a predetermined position so that the position and attitude of the plate 10 and those of the heat-transfer tube 11 are stable.

A rear end portion of the peripheral cover 30 is located on an outer cylindrical casing 13b of the regenerator 13. An inner surface of the rear end portion of the cover 30 is not integrally connected with an outer surface of the front end portion of the casing 13b. Rather, it is connected in a displaceable manner with the casing 13b, which is in sliding contact. An annular spacer 13c is integrally attached to the outer periphery of the casing 13b, spaced at a distance rearward from the cover 30.

An overall length L3 of the peripheral cover 30 is relatively short, involved in reduction of the distance L4. Therefore, excessive thermal stress or thermal deformation is not caused on the cover 30, and cracks by thermal stress or the like due to heat load can be prevented from occurring on the cover 30. Further, a thickness T of the cover 30 can be set to be equal to or less than 8mm, e.g., 5~6mm, owing to reduction in the thermal stress. Therefore, sufficient volume of the air throat 2 and flexibility of design in regard to layout of the openings 12 can be ensured, in spite of provision of the cover 30.

In addition, the thermal deformation of the peripheral cover 30 is not restrained in its axial direction by the radiant tube 14 or the casing 13b, and therefore, the thermal deformation of the cover 30 is permissible in the axial direction. Thus, the thermal stress does not concentrate on a joint portion (the fixing means 31) of the plate 10 and the cover 3, and breakage, damage or the like due to the thermal stress concentration or thermal deformation is not caused.

Dimensions of Heat-Transfer Tube and Opening

The dimensions of the heat-transfer tube 16 are set to be in the following range:

$$Dr/Dt=0.2\sim0.6$$

$$L1/Dr=1.28\sim5.2$$

$$L2/Dr=0.64\sim5.2$$

wherein symbols L1, L2 are as follows:

L1: Distance between the distal end of the fuel injection nozzle 17a and the distal end of the heat-transfer tube 16; and
L2: Distance between the circular plate 10 and the distal end of the heat-transfer tube 16.

For instance, the dimensions Dt, Dr, L1, L2 in the burner apparatus having a nominal diameter of 7B (the diameter of the tube = 7 inches) are set to be as follows:

Dt=approx.180mm(7B)
Dr=approx.90mm(3B)
L1=approx.200mm
L2=approx.200mm.

The openings 12 have the same size and configuration, and a total amount L5 of circumferential edge lengths of the openings 12 is set to fall under L5/Dt=2.0~4.0, preferably, LS/Dt=2.5~3.5. For example, the total amount L3 of the circumferential edge lengths of the openings 12 is set to fall under approximately 350~700mm, preferably, 450~600mm, with respect to the burner apparatus having a nominal diameter of 7B (the diameter of the tube = 7 inches).
Further, the heat-transfer tube 16 physically separates the secondary combustion air and the fuel until the flow A of secondary combustion air and the flow F of the mixed gas join together. The dimension L2 of protrusion of the tube 16 is so set as to ensure a term of time for diluting the secondary combustion air in the air diluting chamber 2 and diluting the fuel in the primary combustion chamber 1.

Operation of Burner Apparatus

The operation of the burner apparatus with the arrangement as previously mentioned is described hereinafter.
Each of the burner units 15 of the burner apparatus alternately performs a combustion operation (supply of the combustion air and the fuel) and a pause in the combustion (exhaust of the combustion exhaust gas) as illustrated in FIG. 1(A) and FIG. 1(B), in response to switching control of supply of the primary air and the fuel to the burner gun 21 and switching control of the four-way valve 19 synchronized therewith.
The primary combustion air and the fuel are fed to the burner gun 21 (FIG. 2) in combustion operation by the primary air supply pipe 22 and the fuel feed pipe 24, so that the air and the fuel are introduced from the primary air delivery ports 18a, 18b and the fuel injection nozzle 17a (FIGS. 3 and 4) into the primary combustion chamber 1, and they are mixed with each other in the chamber 1. The quantity of the supplied air is set to fall under approximately 10~20% of the theoretical amount of air required for complete combustion of the fuel.
The pilot fuel of the pilot fuel feed pipe 28 is normally injected through the pilot fuel injector 40 into the flame stabilizing tube 41. The quantity of the supplied pilot fuel is set to fall under approximately 2~8% of the quantity of the fuel fed by the nozzle 17a. The flame stabilizing section 42 in the tube 41 acts to prevent flame failure, whereby the combustion reactions in the chambers 1 and 4 are stabilized.
A large quantity of the secondary combustion air, which is much greater than a quantity of the primary combustion air, is fed into the air case 20 through the secondary air supply pipe 23, as shown in FIG. 2. The secondary combustion air flows into the narrow passages (passages of cells) of the regenerator 13 at a high temperature. The secondary combustion air is heated up to a temperature equal to or higher than 700°C, preferably, equal to or higher than 900°C by heat-transfer contact with the honey-comb walls (cell walls) of the regenerator 13 and then, the heated air flows into the air throat 2.

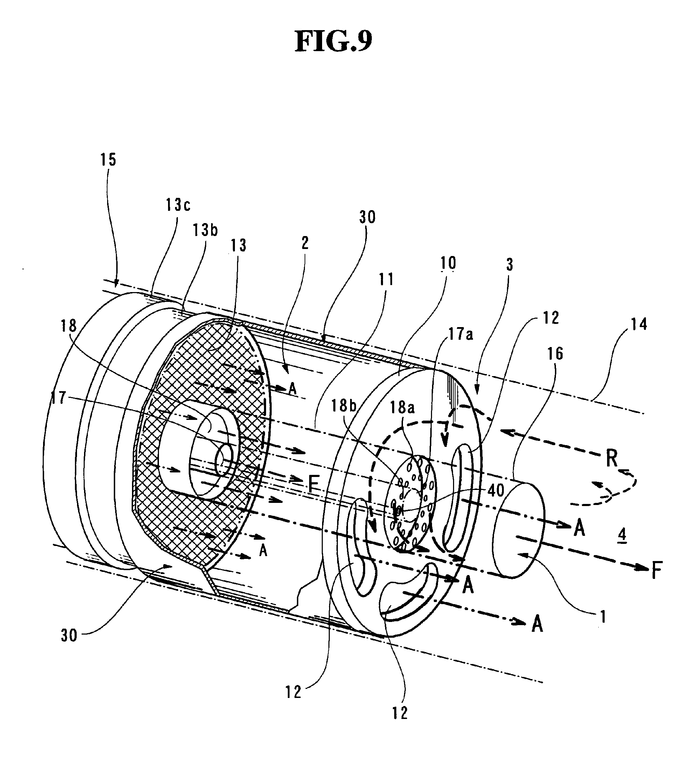

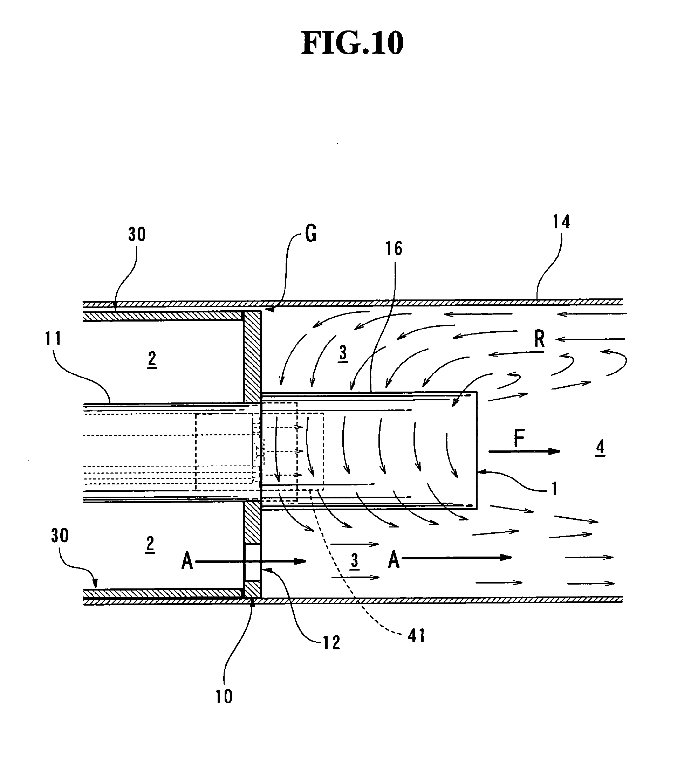

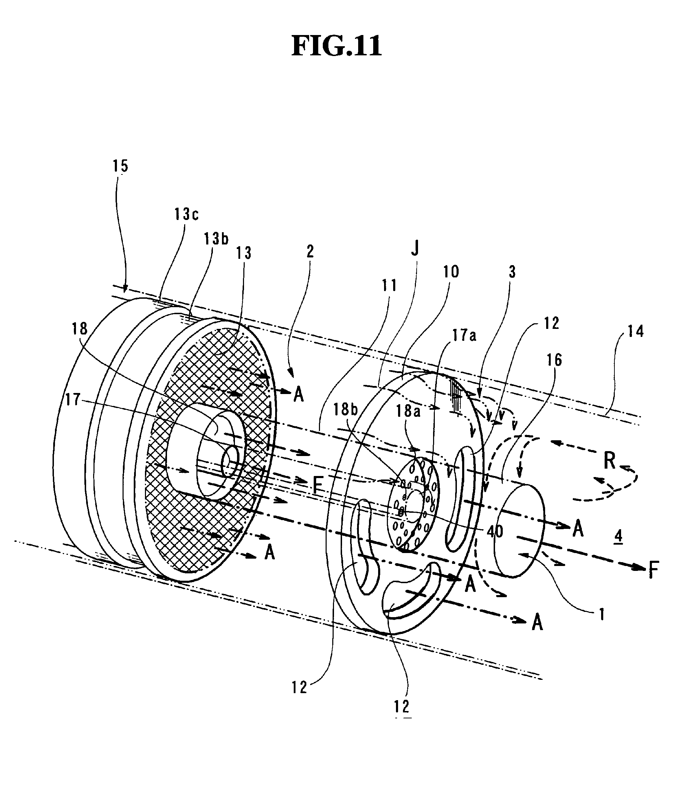

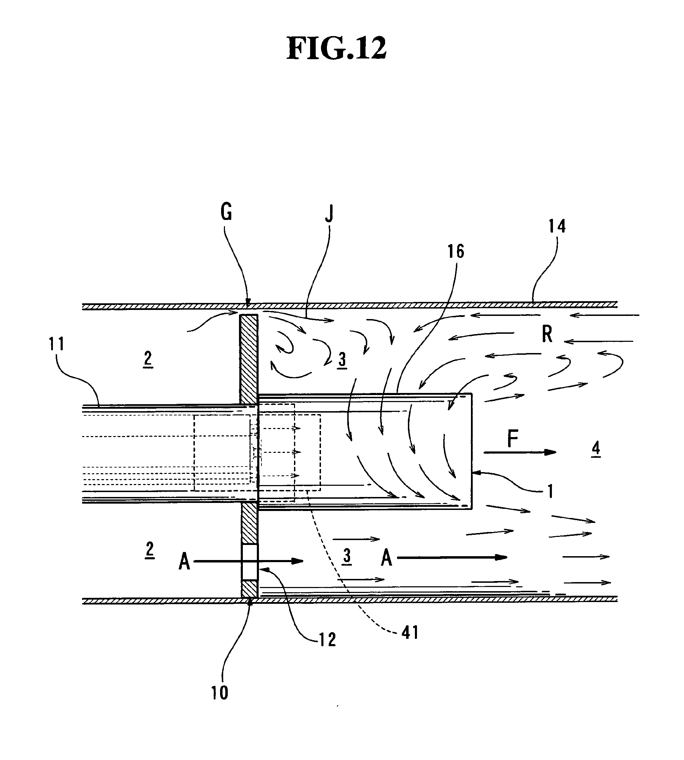

In FIGS. 9 and 10, there are illustrated streams of the secondary combustion air flowing from the openings 12 of the circular plate 10 to the air diluting chamber 3. In FIGS. 11 and 12, there are illustrated streams of the secondary combustion air A flowing into the air diluting chamber 3 in a condition that the peripheral cover 30 is not provided. The burner apparatus as shown in FIGS. 9 to 12 is positioned in a heating furnace or the like so that the openings 12 are located on the underside, and the plate 10 is displaced downward under the gravity. Therefore, a relatively large gap G is formed between the top portion of the periphery of the plate 10 and the inner circumferential surface of the radiant tube 14.
In the burner apparatus with the peripheral cover 30 (FIGS. 9 and 10), the streams of the secondary combustion air A entering the air throat 2 are delivered into the air diluting chamber 3 through the openings 12 which is eccentrically disposed on one side of the circular plate 10. The flow rate of the air A through the opening 12 is set to be, for example, equal to or lower than 30m/s, preferably equal to or lower than 25m/s, more preferably equal to or lower than 20m/s. This is considerably a low velocity range. The cover 30 blocks the fluid communication between the air throat 2 and the chamber 3 on the outer periphery of the plate 10, and therefore, the fluid communication between the areas 2, 3 is limited to the fluid commination at the openings 12. The flows of air A effluent from the openings 12, which have the aforementioned peculiar positions, sizes and configurations, induce the combustion gas of the main combustion chamber 4. As a result, recirculation flows R of combustion gas reversed toward the chamber 3 are created.

According to the burner apparatus with the peripheral cover 30, a flow passage (area) for inducing the recirculation flows R into the air diluting chamber 3 is always ensured in the angular range (θ) in which the opening 12 is not disposed. In addition, since the openings 12 are disposed in a radially outer zone of the circular plate 10, an area for inducing the recirculation flows R and moving the flows R toward the main combustion chamber 4 is created between the flows A of the secondary combustion air and an outer surface of the heat-transfer tube 11. Therefore, effect of combustion gas recirculation can be enhanced in the limited area inside of the radiant tube as set forth above, and the secondary combustion air can be diluted with a relatively large quantity of combustion gas, even under circumstances where the velocity of the air flow A is lowered.

On the other hand, under the condition where the peripheral cover 30 is absent (FIGS. 11 and 12), the secondary combustion air in the air throat 2 flows into the air diluting chamber 3 not only through the openings 12, but also through the periphery of the circular plate 10 (the gap G) as peripheral air flows J. The flows J act to be in opposition against the recirculation flows R and prevent the recirculation flows R from entering the chamber 3. Therefore, the quantity of combustion gas mixed with the secondary combustion air is reduced.

Thus, according to the burner apparatus provided with the peripheral cover 30 (FIGS. 9 and 10), the recirculation flows R can enter the air diluting chamber 3 without being obstructed by the peripheral air flows J. The flows R move around the outer surface of the heat-transfer tube 16 and approach the proximity of the openings 12, so that the flows R effectively mix with the flows of air A in order to dilute the secondary combustion air with a relatively large quantity of combustion gas.

The fuel flowing into the primary combustion chamber 1 in the heat-transfer tube 16 mixes with the primary combustion air to take a partial combustion reaction under a condition of low air ratio, so that the fuel is diluted with the combustion gas which is produced in the combustion chamber 1. The atmosphere in the combustion chamber 1 is normally kept in a high temperature state by the surrounding high temperature atmosphere. The mixture of the fuel, primary combustion air and combustion gas is activated by reforming action in the chamber 1 under a condition of low oxygen concentration or low air ratio, and then, the mixture flows from the chamber 1 to the main combustion chamber 4 as a flow of gaseous mixture F. The outer surface of the heat-transfer tube 11 is normally kept in a high temperature state, because it is in contact with the combustion exhaust gas at a high temperature while the combustion pauses, as described later.

The flow of air A, the oxygen concentration of which has been lowered by mixing with the recirculation flow R, mixes with the flow of gaseous mixture F delivered from the distal end opening of the heat-transfer tube 16, whereby a combustion reaction occurs and proceeds between the flows A and F in the main combustion chamber 4.

In such a burner apparatus, a large quantity of nitrogen oxides are not produced by the combustion reaction in the main combustion chamber 4, in spite of the secondary combustion air flow A introduced at a relatively low speed into the chamber 4. For instance, in measurements conducted by the present inventors, the concentration of nitrogen oxides in the combustion exhaust gas were reduced to a level equal to or less than 130ppm, regardless of the installation condition and thermal deformation of the burner apparatus, even if the velocity of airflow A at the opening 12 was equal to or less than 20m/s. This is considered to mainly result from the formation of the openings 12 having the aforementioned particular sizes and configurations in the certain region of the circular plate 10, and change of property of the fuel caused during flowing inside of the heat-transfer tube 11 at a high temperature, and further, combustion gas recirculation enhanced by the flow of air A at a low speed, owing to installation of the peripheral cover 30, and so forth. In addition, the fuel diluted in the primary combustion chamber 1 as set forth above takes a slow combustion reaction with the flow of high temperature air A having a low speed and a low oxygen density, so that a uniform temperature distribution can be obtained over a relatively wide area of the radiant tube 14.

Further, in the burner apparatus according to the present invention, the fluid communication between the areas 2 and 3 on either sides of the circular plate is restricted only to the openings 12, owing to provision of the peripheral cover 30, and therefore, the distance between the outer circumferential surface of the circular plate 10 and the inner circumferential surface of the radiant tube 14 can be arbitrarily designed as desired. Thus, it is possible to ensure a clearance sufficient enough to facilitate an assembly or replacement work of the burner unit 15. It is also possible to adopt a practical design, such as a standardized design of the burner unit applicable to different dimensions or different standards of the tube diameter Dt, a design of the burner unit 15 applicable to different dimensions of the radiant tube 14, and so forth. Nevertheless, effective reduction in the concentration of nitrogen oxides can be desirably obtained, because the cover 30 prevents the secondary combustion air from leaking out from the periphery of the plate 10 into the air diluting chamber 3 as previously described.

As shown in FIG. 1, the combustion gas flows in the radiant tube 1 toward the burner unit 21 pausing the combustion operation, except the counterflow of the aforementioned recirculation gas. The burner unit 21 pausing the combustion operation receives the combustion exhaust gas from the openings 12 of the circular plate 10 into the air throat 2. The combustion gas in the air throat 2 enters the honey-comb passages (cells) of the regenerator 13 after flowing through the areas surrounding the heat-transfer tubes 11 and 16, so that the combustion gas is in heat-transfer contact with the honey-comb walls (cell walls) of the regenerator 13 at a relatively low temperature to heat the regenerator up to a temperature equivalent to the temperature of the combustion exhaust gas. The combustion exhaust gas, after being cooled by heat-exchange with the regenerator 13, is exhausted to the atmosphere through the four-way valve 19.

Since the velocity of air at the openings 12 of the burner unit 21 on the combustion side is set to be a relatively low, the combustion exhaust gas flowing through the opening 12 on the exhaust side also has a low velocity. For example, when the velocity of air at the opening 12 is set to be equal to or less than 20m/s, the velocity of the combustion exhaust gas at the opening 12 on the exhaust side is restricted to approximately 25m/s or less, even if increase in the volume of combustion exhaust gas is taken into consideration. This results in reduction of the pressure loss in the burner units 21 on each of the combustion side and the exhaust side. Further, the exhaust gas entering the air throat 2 flows into the respective cells of the regenerator 13 relatively uniformly, in spite of reduction of the distance L4. That is, the flow rates of exhaust gas through the respective honey-comb passages are uniformed over the whole area of the regenerator 13 so as to uniformly heat the regenerator, since the exhaust gas at a relatively low speed is uniformly distributed over the whole area of the end face of the regenerator 13 without concentrically entering only a part of the regenerator 13 opposing the opening 12. This prevents the regenerator 13 from exhibiting a local temperature drop or a local overheating, and the regenerator 13 can desirably take efficient performances of heat accumulation and heat exchange. Strictly speaking, the flow rate of the combustion exhaust gas is increased in comparison with the flow rate of the primary air, owing to supply of the primary combustion air and the fuel, combustion reaction, thermal expansion and the like. However, such increase of the flow rate of the combustion exhaust gas is considered to be negligible, as set forth above.

Although the present invention has been described as to a preferred embodiment, the present invention is not limited thereto, but may be carried out in any of various modifications or variations without departing from the scope of the invention as defined in the accompanying claims.

For insurance, the circular plate 10 is formed with the three openings 12 symmetrically arranged, in the aforementioned embodiment, but more openings or less openings may be unsymmetrically formed on the plate 10 in accordance with the present invention.

Further, the size and configuration of the heat-transfer tube 11 is not limited to those in the aforementioned embodiment, but can be appropriately modified or designed in accordance with the present invention.

INDUSTRIAL APPLICABILITY

The present invention is applied to the alternate combustion type regenerative radiant tube burner apparatus, which has the circular plate positioned between the burner unit and the main combustion chamber so that the preheated secondary combustion air is fed through the opening of the plate to the main combustion chamber. According to the present invention, the concentration of nitrogen oxides in the combustion exhaust gas can be definitely prevented from increasing, without being influenced by the installation condition or thermal deformation of the apparatus.

**Claims**

1. An alternate combustion type regenerative radiant tube burner apparatus, which has a radiant tube (14) defining a main combustion chamber (4) and burner units (15) provided on both end portions of the radiant tube, the burner unit being provided with a regenerator (13) and fluid passages (17, 18) for primary combustion air and fuel, the regenerator being alternately in heat-transfer contact with secondary combustion air or combustion exhaust gas, and the fluid passages extending through the regenerator, comprising:

   a circular plate (10) positioned between said burner unit (15) and said main combustion chamber (4); an annular air throat (2) provided between the circular plate and the regenerator, into which the secondary combustion air flows after passing through said regenerator; a cylindrical peripheral cover (30) extending from a peripheral edge portion of said circular plate to a peripheral edge portion of said regenerator; and a heat-transfer tube (16) protruding forward of said circular plate and opening to said main combustion chamber;

   wherein a fuel injection port (17a) and a primary combustion air delivery port (18a, 18b) open in said heat-transfer tube, an inner area of the heat-transfer tube constitutes a primary combustion chamber (1) for mixing the primary combustion air and the fuel, an air diluting chamber (3) in an annular form opening to said main combustion chamber is formed around a distal end portion of the heat-transfer tube, and said circular plate has an opening (12) for communication between said air throat and said air diluting chamber; and

wherein a front end portion of said peripheral cover is integrally connected with the peripheral edge portion of said circular plate so as to prevent the secondary combustion air of said air throat from leaking at a periphery of said circular plate to said air diluting chamber.

2. The apparatus as defined in claim 1, wherein said peripheral cover is contained in the radiant tube in such a condition that thermal deformation of the cover in its axial direction is not restrained by the radiant tube and the regenerator.

3. The apparatus as defined in claim 1 or 2, wherein a center (PC) of the opening (12) is positioned in a zone redially outside of a circle (R) centered on a center line (C) of said circular plate, the circle (R) having a predetermined radius S and the radius S equals [(an inner diameter Dt of the radiant tube + an outer diameter Dr of the heat-transfer tube)/4].

4. The apparatus as defined in one of claims 1 to 3, wherein said opening (12) of the circular plate is positioned in a range of a central angle of the circular plate ($\gamma$) equal to or less than 250° ($\gamma \leqq 250°$).

5. The apparatus as defined in one of claims 1 to 4, wherein a velocity of airflow at the opening (12) of said circular plate is set to be equal to or lower than 30m/s.

6. The apparatus as defined in one of claims 1 to 5, wherein said fuel injection port (17a) and said primary combustion air delivery port (18a, 18b) are positioned on a plane of said circular plate or in front thereof.

7. The apparatus as defined in one of claims 1 to 6, wherein a flame stabilizing tube (41) is located in said heat-transfer tube so as to surround said fuel injection port (17a) and said primary combustion air delivery port (18a, 18b), and a pilot fuel injection port (40) opens in the flame stabilizing tube.

8. An alternate combustion type regenerative radiant tube burner apparatus, which has a radiant tube (14) defining a main combustion chamber (4) and burner units (15) provided on both end portions of the radiant tube, the burner unit being provided with a regenerator (13) and fluid passages (17, 18) for primary combustion air and fuel, the regenerator being alternately in heat-transfer contact with secondary combustion air or combustion exhaust gas, and the fluid passages extending through the regenerator, comprising:

a circular plate (10) positioned between said burner unit (15) and said main combustion chamber (4); an annular air throat (2) formed between the circular plate and the regenerator, into which the secondary combustion air flows after passing through said regenerator; a cylindrical peripheral cover (30) extending from a peripheral edge portion of said circular plate to a peripheral edge portion of said regenerator; and a heat-transfer tube (16) protruding forward of said circular plate and opening to said main combustion chamber;

wherein a fuel injection port (17a) and a primary combustion air delivery port (18a, 18b) open in said heat-transfer tube, an inner area of the heat-transfer tube constitutes a primary combustion chamber (1) for mixing the primary combustion air and the fuel, an air diluting chamber (3) in an annular form opening to said main combustion chamber is formed around a distal end portion of the heat-transfer tube, and said circular plate has an opening (12) for communication between said air throat and said air diluting chamber; and

wherein a distance (L4) between said regenerator and said circular plate is set in such a manner that a ratio (L4/Dt) of the distance (L4) to an inner diameter (Dt) of the radiant tube is equal to or less than 1.0.

9. The apparatus as defined in claim 8, wherein said peripheral cover and said regenerator are connected with each other displaceably in an axial direction.

10. The apparatus as defined in claim 8 or 9, wherein a velocity of airflow at said opening (12) of the circular plate is set to be equal to or less than 30m/s, and a velocity of the exhaust gas at the opening is set to be equal to or less than 35m/s.

11. The apparatus as defined in one of claims 8 to 10, wherein a thickness (T) of said peripheral cover is set to be equal to or less than 8mm.

12. The apparatus as defined in one of claims 8 to 11, wherein said peripheral cover is constituted from a heat-resistant metal alloy plate shaped by bending.

13. A combustion method in an alternate combustion type regenerative radiant tube burner apparatus; wherein a circular plate (10) is positioned between a main combustion chamber (4) in a radiant tube (14) and a regenerator (13) alternately in heat-transfer contact with secondary combustion air or combustion exhaust gas, primary combustion air and fuel are fed to the main combustion chamber through a heat-transfer tube (11, 16) extending through the circular plate; and wherein an air diluting chamber (3) in an annular form opening to the main combustion chamber is formed around a distal end portion of the heat-transfer tube so that the secondary combustion air (A) heated up to a high temperature by heat-transfer contact with the regenerator enters the air diluting chamber, and said fuel and said primary combustion air are mixed with said secondary combustion air in the main combustion chamber while an ejected flow of the secondary combustion air induces the combustion gas of the main combustion chamber, comprising:

blocking fluid communication between areas on both sides of said circular plate, at a periphery of the circular plate, so that the fluid communication between these areas are limited to an opening (12) disposed in a range of central angle of said circular plate ($\gamma$) equal to or less than 250° ($\gamma \leqq 250°$), a center (PC) of the opening being positioned in a zone radially outside of a circle (R) with a predetermined radius S about a center line (C) of the circular plate, and the radius S being equal to [(an inner diameter Dt of the radiant tube + an outer diameter Dr of the heat-transfer tube)/4]; and

injecting said secondary combustion air to said air diluting chamber at a velocity equal to or less than 30m/s by said opening (12), and directing an ejected flow of the combustion exhaust gas of said main combustion chamber toward said regenerator at a velocity equal to or less than 35m/s by the opening (12).

14. The method as defined in claims 13, wherein a quantity of supply of said primary combustion air is set to be 10~20% of a theoretical amount of air required for complete combustion of the fuel.

15. The method as defined in claims 13 or 14, wherein said primary combustion air and said fuel are fed to said primary combustion chamber through a flame stabilizing section (41) and a pilot fuel of 2~8% of supply of said fuel is fed to the flame stabilizing section.

# FIG.1

## (A)

Secondary Air →

Primary Air →

Fuel Gas →

Exhaust

## (B)

Fuel Gas →

Primary Air →

Secondary Air →

Exhaust

# FIG.2

# FIG.3

## (A)

## (B)

# FIG.4

# FIG.5

(A)

(B)

# FIG.6

## (A)

Y-axis: Ratio of Flow Rate relative to Flow Rate of Leakage Flow at Gap of 1mm

Change of Flow Rate at Gap in relation to Change of Gap Size

Diameter of Circular Plate =183mm

3.15

1.53

X-axis: Gt: Gap Size (mm)

## (B)

Y-axis: NOx (11%O₂, PPM)

Change of NOx Value in relation to Change of Gap Size

Diameter of Circular Plate =183mm

X-axis: Gt: Gap Size (mm)

# FIG.7

(A)

**Blocked Portion**

α

12

G

12

10

14

12

(B)

**Blocked Portion** 14

A

10

12

A A

G

(C)

| | Blockage of Gap (Blockage Angle $\alpha$) | | | |
|---|---|---|---|---|
| | 0° | 90° | 180° | 360°(Full Blockage) |
| NOx Concent--ration ($O_2$ 11%) | 150~200 | 140~180 | 130~150 | 115~120 |

# FIG.8

(A)

(B)

# FIG.9

# FIG.10

EP 1 602 880 A1

# FIG.11

25

# FIG.12

**EP 1 602 880 A1**

| INTERNATIONAL SEARCH REPORT | International application No. |
|---|---|
| | PCT/JP2004/002203 |

**A. CLASSIFICATION OF SUBJECT MATTER**
Int.Cl$^7$ F23C3/00, F23L15/02, F23D14/12

According to International Patent Classification (IPC) or to both national classification and IPC

**B. FIELDS SEARCHED**

Minimum documentation searched (classification system followed by classification symbols)
Int.Cl$^7$ F23C3/00, F23C9/00, F23C11/00, F23D14/12, F23D14/66,
F23L15/02, F23M3/00, F23M9/00

Documentation searched other than minimum documentation to the extent that such documents are included in the fields searched
Jitsuyo Shinan Koho          1926–1996   Toroku Jitsuyo Shinan Koho   1994–2004
Kokai Jitsuyo Shinan Koho    1971–2004   Jitsuyo Shinan Toroku Koho   1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | US 6027333 A (NKK CORP.),<br>22 February, 2000 (22.02.00),<br>Full text<br>& WO 96/009496 A1        & JP 08-247421 A<br>& EP 736732 A1 | 1,4–7<br>2–3,8–15 |
| Y<br>A | JP 2002-48334 A (Nippon Furnace Kogyo Kaisha,<br>Ltd.),<br>14 February, 2002 (14.02.02),<br>Par. Nos. [0023], [0025], [0028]; Figs. 1 to 6<br>(Family: none) | 1,4–5,7<br>2–3,6,8–15 |
| Y<br>A | JP 10-115408 A (NKK CORP.),<br>06 May, 1998 (06.05.98),<br>Par. Nos. [0028] to [0029]; Figs. 1 to 15<br>(Family: none) | 6–7<br>1–5,8–15 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 April, 2004 (02.04.04) | 20 April, 2004 (20.04.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

27

**INTERNATIONAL SEARCH REPORT**

| International application No. |
| --- |
| PCT/JP2004/002203 |

C (Continuation).  DOCUMENTS CONSIDERED TO BE RELEVANT

| Category* | Citation of document, with indication, where appropriate, of the relevant passages | Relevant to claim No. |
| --- | --- | --- |
| Y<br>A | JP 9-217904 A  (TOYOTA JIDOSHA KABUSHIKI KAISHA),<br>19 August, 1997 (19.08.97),<br>Par. No. [0010]; Figs. 1 to 4<br>(Family: none) | 1<br>2-15 |
| A | US 6036476 A  (TOYOTA JIDOSHA KABUSHIKI KAISHA),<br>14 March, 2000 (14.03.00),<br>Full text<br>& EP 801265 A2          & EP 1211459 A2<br>& EP 1213535 A2          & JP 09-280156 A<br>& US 6095798 A1          & US 6102691 A1 | 1-15 |
| A | JP 2002-333106 A  (NKK Corp.),<br>22 November, 2002 (22.11.02),<br>Figs. 1 to 6<br>(Family: none) | 1-15 |
| A | JP 11-211371 A  (Nippon Furnace Kogyo Kaisha,<br>Ltd.),<br>06 August, 1998 (06.08.98),<br>Par. Nos. [0009], [0026]; Figs. 1 to 5<br>(Family: none) | 2,9 |
| A | JP 2000-356310 A  (Chugai Ro Co., Ltd.),<br>26 December, 2000 (26.12.00),<br>Figs. 1 to 6<br>(Family: none) | 3 |

Form PCT/ISA/210 (continuation of second sheet) (January 2004)